Europäisches Patentamt

European Patent Office

Office européen des brevets

(11) Publication number: **0 447 200 B1**

## EUROPEAN PATENT SPECIFICATION

(45) Date of publication of patent specification: **12.10.94**

(51) Int. Cl.⁵: **B60C 15/00**, B60C 15/06

(21) Application number: **91302098.8**

(22) Date of filing: **13.03.91**

(54) **High speed heavy duty tyre.**

(30) Priority: **16.03.90 JP 67452/90**

(43) Date of publication of application:
**18.09.91 Bulletin 91/38**

(45) Publication of the grant of the patent:
**12.10.94 Bulletin 94/41**

(84) Designated Contracting States:
**DE FR GB**

(56) References cited:
**EP-A- 0 323 208**
**US-A- 4 047 552**
**US-A- 4 295 512**

(73) Proprietor: **SUMITOMO RUBBER INDUSTRIES LIMITED**
**1-1 Tsutsuicho 1-chome**
**Chuo-ku**
**Kobe-shi Hyogo-ken (JP)**

(72) Inventor: **Ueyoko, Kiyoshi**
**2-10-2, Fukaeminami,**
**Higashinari-ku**
**Osaka-shi, Osaka-fu (JP)**
Inventor: **Takatsu, Mikio**
**12-18, Takatsukasa 1-chome**
**Takarazuka-shi, Hyogo-ken (JP)**
Inventor: **Hoshino, Hiroshi**
**1-20-204, Suganodai 2-chome**
**Suma-ku, Kobe-shi, Hyogo-ken (JP)**

(74) Representative: **Stewart, Charles Geoffrey**
**SP TYRES UK LIMITED**
**Tyre Technical Division**
**Fort Dunlop, Erdington, Birmingham B24 9OT**
**(GB)**

**Description**

The present invention relates to a high speed heavy duty tyre.

Recently, in such tyres, and in particular tyres for aircraft, radial carcasses have come into use in order to improve structural durability, running performance, fuel consumption performance and the like.

In radial tyres for aircraft, the bead portions are subjected to a large bending deformation under heavy load conditions, and the internal temperature of the bead portion is greatly increased by high speed running during take-off and landing. These cause bead damage, e.g. separation failure between the adjacent plies and between reinforcement cords and the surrounding rubber.

Even when the running speed is low, if the running time is long, for example during taxiing, internal temperature is increased. In this case, in addition to the above-mentioned damages, a rubber breakage extending from the cords to the outer surface of the tyre sidewall can occur at a position near the carcass edges.

In order to prevent such failures by reducing the temperature rise, a rubber with a low heat generation property has been used in the bead portion and in the lower sidewall portion.

It was, however, found that such a low heat generation rubber tends to induce bead damages at an early stage of the tyre life during both high speed running and low speed running contrary to expectations.

A known tyre comprising the features of the preamble of claim 1 is shown, e.g. in EP-A-0 323 208.

It is an object of the present invention to provide a tyre for high speed and heavy duty use, in which the bead portion is improved in durability.

The inventors discovered that the distances between the adjacent carcass cords located in the bead portion and the lower sidewall portion have an unexpected influence on bead damage.

However rubber with a low heat generation property, i.e. heat generation caused by bending deformation, is found to have poor strength. Thus if used with small distances between adjacent cords, the shear stress generated in the rubber between the cords is large and causes separation failures of the carcass cords from the surrounding rubber.

According to the present invention a tyre for high speed and heavy duty use comprises a pair of bead portions, a tread portion, a pair of sidewall portions extending between the tread edges and the bead portions, a pair of bead cores disposed one in each portion, a radial carcass having at least one ply of rubberised cords extending between the bead portions and turned up around the bead cores, a tread disposed radially outside the carcass and a belt layer disposed radially outside the carcass and inside said tread, characterised in that when the tyre is mounted on its regular rim and inflated to its regular inner pressure, at least 60% of the spacings in number between the adjacent carcass cords located in a tyre side portion defined between two points P1 and P2 are not less than 1/4 times and not more than 2 times the thickness D of the carcass cords, wherein the point P1 is located on the outer surface of the tyre at a height corresponding to the height of a rim flange Rb and the point P2 is located on the outer surface of the tyre at a height of 1/3 times the tyre section height H, and the carcass cord coating rubber having the following properties: a 100% modulus of not less than 40 kg/cm$^2$ and not more than 70 kg/cm$^2$, an elongation at rupture of not less than 200% and not more than 350%, and a stress at rupture of not less than 150 kg/cm$^2$ and not more than 300 kg/cm$^2$.

Taking a tyre size of 46x17R20 for aircraft tyres as an example, an embodiment of the present invention will now be described in detail with reference to the accompanying drawings, in which:

Figure 1 is a half-sectional view of a tyre;

Figure 2 is an enlarged sectional view showing the bead portion and lower sidewall portion;

Figure 3 is an enlarged sectional view taken along the line I-I of Figure 2; and

Figure 4 is a diagram showing the relationship between the thickness of the lower sidewall portion and the internal temperature thereof.

The tyre 1 is shown mounted on its regular rim R and inflated to its regular inner pressure. This condition is hereinafter referred to as the "normal pressure condition".

The tyre 1 has a pair of axially spaced bead portions 3, a tread portion 5, and a pair of sidewall portions 4 extending between the tread edges and the bead portions 3. The tyre further comprises a pair of bead cores 2 disposed one in each bead portion 3, a carcass 7 extending between the bead portions through the sidewall portions 4 and the tread portion 5.

The rim R comprises a pair of tapered bead sets Ra and a pair of flanges Rb extending radially outwardly from the axially outer edges of the bead seats Ra. The bottom face 3a and side face 3b of each bead portion 3 contact the bead seat Ra and the flange Rb of the rim, respectively.

The carcass 7 comprises a plurality of plies of rubberised cords extending between the bead portions and turned up around the bead cores.

In this embodiment, the carcass is composed of two layers 7A and 7B, wherein the inner layer 7A is composed of plural plies 7a (in this example 4 plies) turned up around the bead cores 2 from the inside to the outside of the tyre, and the outer layer 7B is composed of plural plies 7b (in this example 2 plies) turned up in the reverse direction around the bead cores from the outside to the inside of the tyre to wrap around the turned up portion of the inner layer 7A.

Each carcass ply 7a of the inner layer has a toroidal main portion 70 extending between the bead portions 3 through the sidewall portions 4 and the tread portion 5, and turned up around the bead cores 2 from the axially inside to the outside thereof to form turned up portions 71.

Each carcass ply 7b of the outer layer has a toroidal main portion 73 extending between the bead portions 3 through the sidewall portions 4 and the tread portion 5, and turned up around the bead cores 2 from the axially outside to the inside thereof to form turned up portions 74.

In each of the carcass plies 7a and 7b, the carcass cords 6 are arranged radially at an angle of 70 to 90 degrees with respect to the tyre equator and embedded in a tapping rubber compound 8.

In the adjacent carcass plies of the carcass 7 in this embodiment, the cords of one carcass ply are inclined towards one side of the tyre equator, and the cords of the other carcass ply are inclined towards the other side of the tyre equator, so that the carcass cords in each ply cross the cords of the adjacent carcass ply.

For the carcass cords 6, organic fibre cords, e.g. rayon, polyester, VINYLON (Trade Mark), nylon, aromatic polyamide or the like can be used.

Each bead portion 3 is provided with a bead apex 9 between the above-mentioned main portion 70 and the turned up portion 71. The bead apex 9 extends taperingly radially outwardly from the bead core 2 to a position over the radially outer edge of the rim flange Rb.

In the above-mentioned tread portion, a belt layer 10 is disposed radially outside the carcass 7 and radially inside the rubber tread 5.

The belt layer 10 is composed of a plurality of plies 10a (in this example eight plies). The axially outer edges of the belt plies are aligned so that each edge of the belt layer 10 is substantially parallel with the outer surface of the tyre. The belt layer 10 has a width of 70 to 85% of the tyre section width so as to tightly bind the carcass to increase the rigidity of the tyre and thereby to improve the running performance. The cords of each belt ply 10a are laid at an angle of 0 to 20 degrees with respect to the tyre equator and in parallel with each other.

According to the present invention, the distances between the adjacent cords 6 are specifically defined in a specific portion 12 defined by a point P1 and a point P2. This portion 12 is a portion in which a large bending deformation occurs when in the ground contacting patch of the tyre and thus this portion is where damage is most liable to occur.

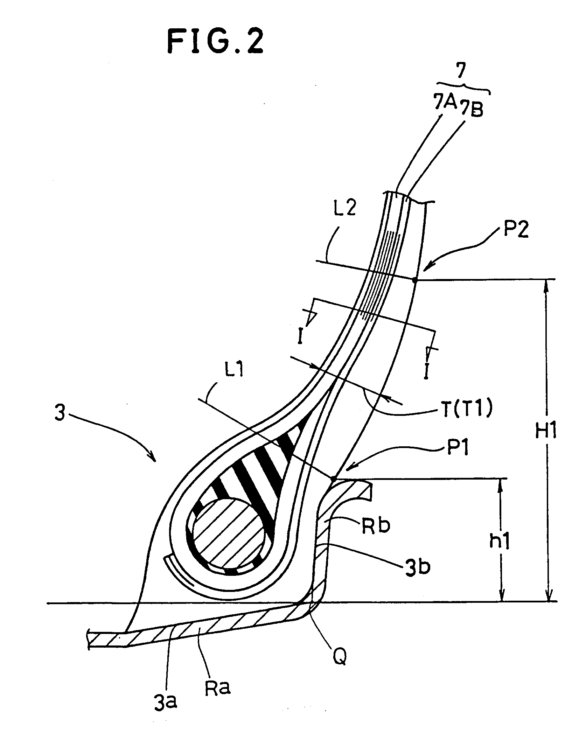

As shown in Figure 2, the above-mentioned point P1 is located on the outer surface of the tyre at a height h1 corresponding to the height of the rim flange Rb, and the point P2 is located on the outer surface of the tyre at a height H1 of 1/3 times the tyre section height H. Both the above-mentioned heights are measured radially from a heel point Q which is defined as the intersection between an extension line of the bead bottom face 3a and an extension line of the bead side face 3b.

The above-mentioned portion 12 is defined as being between a straight line L1 drawn perpendicularly to the outer surface of the tyre from the point P1 and a straight line L2 drawn perpendicularly to the outer surface of the tyre from the point P2.

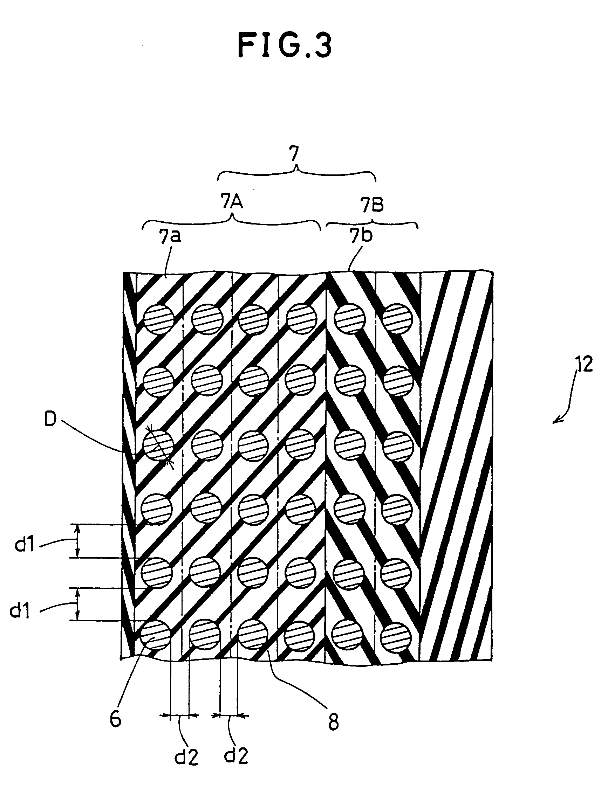

In this annular portion 12 of each sidewall of the tyre, as shown in Figure 3, under the above-mentioned normal pressure condition, the distances between the adjacent carcass cords, more precisely the distances d1 between the adjacent carcass cords in each of the carcass ply 7a and 7b and the distance d2 between the cords of each carcass ply and those of the next carcass ply, are set to be not less than 1/4 times and not more than 2 times the thickness D of the carcass cords, whereby the shear strain caused between the carcass cords and between the carcass plies by bent deformation is mitigated by the rubber existing between the carcass cords, that is, the carcass rubber 8, and as a result rubber breakage and cord separation failure are prevented, and durability is improved.

Incidentally, to achieve this, the above-mentioned regulation of the distances d1 and d2 must be met by at least 60% or more of the number of the distances d1 and d2, preferably not less than 80%, and more preferably not less than 90% of the number of the distances.

If the distances d1 and d2 are less than 1.4 times the thickness D, the shear stress is not fully mitigated, and rubber breakage still occurs.

If the distances are more than 2 times the thickness D, the thickness T of the portion 12 is excessively increased, and as a result the internal temperature thereof is increased by the bending deformation which decreases bead durability.

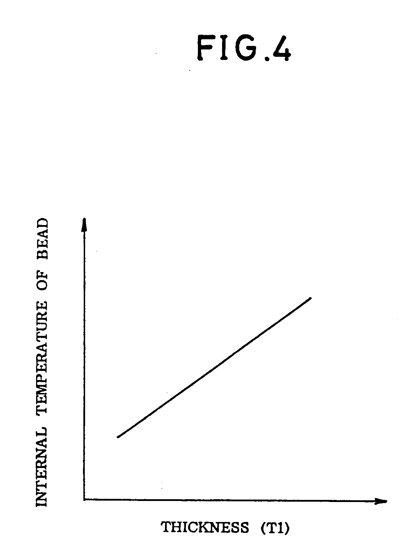

Figure 4 shows a relationship between the thickness T1 of the lower sidewall portion 12 measured at a height of 1/5 times the tyre section height H from the above-mentioned heel point Q and the internal temperature during high speed running. As apparent from the Figure, the internal temperature is increased roughly in direct proportion to an increase in the thickness T.

With respect to the above-mentioned distances d2 which are the cord spacings d2 between the adjacent plies, those adjacent plies include all possible combinations, for example the main portions 70 and 70, the main portions 70 and 73, the main portions 73 and 73, the turned up portions 71 and 71, the main portions 70 and the turned up portion 71, and the main portions 73 and the turned up portion 71.

According to the present invention, for the above-mentioned carcass rubber 8, a rubber compound having the following characteristics is used:

The 100% modulus is not less than 40 $kg/cm^2$ and not more than 70 $kg/cm^2$; the elongation at rupture is not less than 200% and not more than 350%; and the stress at rupture is not less than 150 $kg/cm^2$ and not more than 300 $kg/cm^2$.

Accordingly, the carcass rubber has a higher strength in comparison with a known low heat generation rubber compound, and the durability is improved.

If the 100% modulus is made less than 40 $kg/cm^2$, when the elongation at rupture is more than 350%, or when the stress at rupture is more than 300 $kg/cm^2$, heat generation increases, and high speed durability of the bead portion is apt to be decreased.

If the 100% modulus is more than 70 $kg/cm^2$, when the elongation at rupture is less than 200%, or when the stress at rupture is less than 150 $kg/cm^2$, the strength of the rubber becomes insufficient, and a decrease in the bead durability by rubber breakage is liable to occur.

More preferably, the 100% modulus is 45 to 55 $kg/cm^2$, the elongation at rupture is 280 to 340%, and the stress at rupture is 200 to 250 $kg/cm^2$.

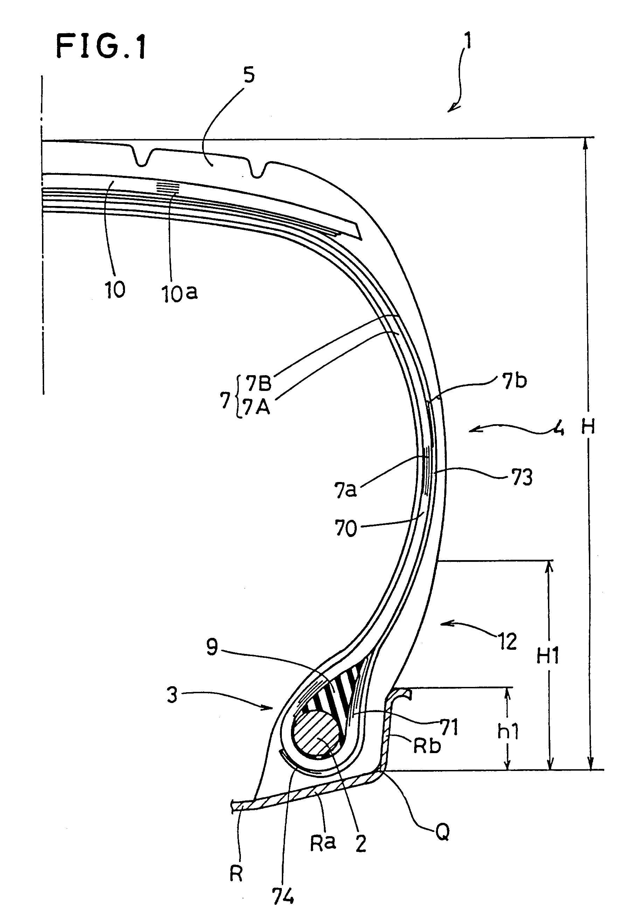

Test tyres of size 46x17R20 for aircraft having the tyre construction shown in Figure 1 were made and tested for bead durability.

The specifications of the test tyres are given in Table 1. Table 2 shows the components and properties of the carcass rubbers A, B and C shown in Table 1.

In the bead durability tests, the high speed durability and the low speed durability were evaluated, and further the heat generation was measured.

The high speed durability test was the overload take-off 100 cycle test, with a 150% load of the normal tyre load, in accordance with Technical Standard Order TSO-C62c of the Federal Aviation Administration in USA.

After the 100 cycle test, the difference between the bead temperatures before and after the test was found, and then the tyre was cut and inspected fro breakage of the carcass rubber.

The heat generation index in Table 1 is the above-mentioned difference, that is the increase in temperature during the test divided by the temperature before the test.

For the low speed durability test, the test was run at a speed of 11 Km/h under a 120% load of the normal tyre load, and the running distance to bead damage was measured. Alternatively, when the total running distance reached 3000 km, the test was finished.

For the carbon in Table 2, carbon having a mean particle diameter of HAF or ISAF grade and a surface coverage to iodine of 70 to 130 mg/g was used.

For the accelerator, one of the following accelerators or a combination of at least two of the following accelerators can be used:

```
(1)   thiazole accelerator          : M,DM,MZ

(2)   sulfenamide accelerator       : CZ,NZ,MSA,DZ

(3)   dithiocarbamic accelerator    : EZ,BZ,PX,ZP

(4)   guanidine accelerator         : D,DT,BG,PR

(5)   thiuram accelerator           : TT,TET,TBT,TS

(6)   aldehyde ammonia accelerator  : HMT
```

As described above, in the high speed duty tyre according to the present invention, the carcass in the specific portion is specifically defined in respect of the cord spacings and the rubber properties whereby the carcass rubber is prevented from being broken, and both high speed durability and low speed durability of the bead are greatly improved.

TABLE 1

| | Ex.1 | Ex.2 | Ref.1 | Ref.2 | Ex.3 | Ex.4 | Ref.3 | Ref.4 | Ref.5 | Ref.6 | Ref.7 |
|---|---|---|---|---|---|---|---|---|---|---|---|
| Carcass | | | | | | | | | | | |
| Coating rubber | A | A | A | A | B | B | B | B | C | C | C |
| Cord thickness (mm) | 1.02 | 1.02 | 1.02 | 1.02 | 1.02 | 1.02 | 1.02 | 1.02 | 1.02 | 1.02 | 1.02 |
| Distance d1 (mm) | 1.2 | 1.2 | 1.2 | 1.2 | 1.2 | 1.2 | 1.2 | 1.2 | 1.2 | 1.2 | 1.2 |
| Distance d2 (mm) | 1.0 | 2.0 | 0.2 | 2.5 | 1.0 | 2.0 | 0.2 | 2.5 | 1.0 | 0.5 | 0.2 |
| High Speed Durability | | | | | | | | | | | |
| Heat generation index | 1.15 | 1.37 | 0.98 | 1.50 | 1.0 | 1.25 | 0.92 | 1.35 | 1.10 | 0.95 | 0.95 |
| Rubber breakage | non | non | non | broken *1 | non | non | broken | broken | broken *1 | broken *1 | broken *1 |
| Low Speed Durability | | | | | | | | | | | |
| Running distance (km) | 3000 | 3000 | 3000 | 3000 | 3000 | 3000 | 1500 | 2200 | 1200 | 800 | 350 |
| Rubber breakage *2 | non | non | broken *1 | non | non | non | broken | broken | broken | broken | broken |
| | - | - | loose | - | - | - | open | open | loose | open | open |

*1: broken at the early stage
*2: loose: A carcass ply turned up looseness was occurred.
    open: A sidewall rubber breakage extending from the carcass to the outer surface of the tire sidewall was occurred.

TABLE 2

| Carcass Cord coating Rubber | A | B | C |
|---|---|---|---|
| Components (weight %) | | | |
| Natural rubber | 100 | 100 | 100 |
| Carbon | 65 | 67.5 | 40 |
| Stearic acid | 2 | 2 | 2 |
| Zinc oxide | 10 | 10 | 10 |
| Sulfur | 4.5 | 6.0 | 1.5 |
| Accelerator | 0.9 | 1.2 | 2.3 |
| Physical Properties | | | |
| 100% modulus (kgf/sq.cm) | 48 | 65 | 25 |
| Elongation at rupture (%) | 335 | 230 | 530 |
| Stress at rupture (kgf/sq.cm) | 210 | 170 | 270 |

EP 0 447 200 B1

**Claims**

1. A tyre for high speed and heavy duty use comprising a pair of bead portions (3), a tread portion (5), a pair of sidewall portions (4) extending between the tread edges and the bead portions (3), a pair of bead cores (2) disposed one in each portion (3), a radial carcass (7) having at least one ply of rubberised cords extending between the bead portions (3) and turned up around the bead cores (2), a tread (5) disposed radially outside the carcass (7), and a belt layer (10) disposed radially outside the carcass (7) and inside said tread (8), characterised in that when the tyre is mounted on its regular rim and inflated to its regular inner pressure, at least 60% of the spacings (d1,d2) in number between the adjacent carcass cords (6) located in a tyre side portion (3) defined between two points P1 and P2 are not less than 1/4 times and not more than 2 times the thickness D of the carcass cords, wherein the point P1 is located on the outer surface of the tyre at a height corresponding to the height of a rim flange Rb and the point P2 is located on the outer surface of the tyre at a height of 1/3 times the tyre section height H, and the carcass cord coating rubber having the following properties: a 100% modulus of not less than 40 kg/cm$^2$ and not more than 70 kg/cm$^2$, an elongation at rupture of not less than 200% and not more than 350%, and a stress at rupture of not less than 150 kg/cm$^2$ and not more than 300 kg/cm$^2$.

2. A tyre according to claim 1 characterised in that the 100% modulus of the carcass cord coating rubber is 45 to 55 kg/cm$^2$, the elongation at rupture thereof is 280 to 340%, and further the stress rupture thereof is 200 to 250 kg/cm$^2$.

3. A tyre according to claim 1 or 2 characterised in that the or each carcass ply (7), the thickness of the coating rubber measured from the surface to the carcass cords is in the range of 1/8 to 1 times the thickness of the carcass cords.

4. A tyre according to claim 1, 2 or 3 characterised in that at least 80% of the spacings, in number, of all the spacings (d1,d2) existing in said tyre side portion defined between the two points (P1 and P2) are not less than 1/4 times and not more than 2 times the thickness (D) of the carcass cords.

5. A tyre according to claim 1, 2 or 3 characterised in that all the spacings (d1,d2) between the adjacent carcass cords (6) in said tyre side portion defined between the two points (P1 and P2) are not less than 1/4 times and not more than 2 times the thickness (D) of the carcass cords.

**Patentansprüche**

1. Ein Reifen für Hochgeschwindigkeits- und Schwerlastverwendung mit einem Paar von Wulstteilen (3), einem Laufflächenteil (5), einem Paar von sich zwischen den Laufflächenrändern und den Wulstteilen (3) erstreckenden Seitenwandteilen (4), einem Paar von Wulstkernen (2), wovon einer in jedem Teil (3) angeordnet ist, einer radialen Karkasse (7) mit zumindest einer Lage von gummierten Corden, die sich zwischen den Wulstteilen (3) erstrecken und um die Wulstkerne (2) geschlagen sind, einer Lauffläche (5), die radial außerhalb der Karkasse (7) angeordnet ist, und einer Gürtellage (10), die radial außerhalb der Karkasse (7) und innerhalb der Lauffläche (8) angeordnet ist, dadurch **gekennzeichnet,** daß, wenn der Reifen auf seiner regulären Felge aufgezogen und zu seinem regulären inneren Druck aufgepumpt ist, zumindest 60 % der Beabstandungen (d1, d2) an der Zahl zwischen den benachbarten Karkassencorden (6), die in einem Reifenseitenteil (3) angeordnet sind, das zwischen zwei Punkten P1 und P2 festgelegt ist, nicht weniger als ein 1/4 mal und nicht mehr als 2 mal die Dicke D der Karkassencorde betragen, worin der Punkt P1 auf der äußeren Oberfläche des Reifens bei einer Höhe entsprechend der Höhe eines Felgenflansches Rb angeordnet ist und der Punkt P2 auf der äußeren Oberfläche des Reifens bei einer Höhe von 1/3 mal der Reifenquerschnittshöhe H angeordnet ist, und das Karkassencord überziehende Gummi die folgenden Eigenschaften aufweist: ein 100 % Modul von nicht weniger als 40 kg/cm$^2$ und nicht mehr als 70 kg/cm$^2$, eine Bruchdehnung von nicht weniger als 200 % und nicht mehr als 350 %, und eine Bruchspannung von nicht weniger als 150 kg/cm$^2$ und nicht mehr als 300 kg/cm$^2$.

2. Ein Reifen nach Anspruch 1, dadurch **gekennzeichnet,**

6

daß der 100 % Modul des Karkassencord überziehenden Gummis 45 bis 55 kg/cm² beträgt, die Bruchdehnung davon 280 bis 340 % beträgt, und weiter die Bruchspannung davon bei 200 bis 250 kg/cm² liegt.

3.  Ein Reifen nach Anspruch 1 oder 2,
    dadurch **gekennzeichnet**,
    daß in der oder jeder Karkassenlage (7) die Dicke des Überzugsgummis gemessen von der Oberfläche der Karkassencorde in dem Bereich von 1/8 bis 1 mal die Dicke der Karkassencorden liegt.

4.  Ein Reifen nach Anspruch 1, 2 oder 3,
    dadurch **gekennzeichnet**,
    daß zumindest 80 % der Beabstandungen an der Zahl aller der Beabstandungen (d1, d2), die in dem Reifenseitenteil vorliegen, das zwischen den zwei Punkten (P1 und P2) festgelegt ist, nicht weniger als 1/4 mal und nicht mehr als 2 mal die Dicke (D) der Karkassencorde betragen.

5.  Ein Reifen nach Anspruch 1, 2 oder 3,
    dadurch **gekennzeichnet**,
    daß alle der Beabstandungen (d1, d2) zwischen den benachbarten Karkassencorden (6) in dem Reifenseitenteil, das zwischen den zwei Punkten (P1 und P2) festgelegt ist, nicht weniger als 1/4 mal und nicht mehr als 2 mal die Dicke (D) der Karkassencorden betragen.

## Revendications

1.  Pneumatique destiné à être utilisé sous de lourdes charges et à des vitesses élevées, comprenant une paire de parties (3) de talon, une partie (5) de bande de roulement, une paire de parties (4) de flanc disposées entre les bords de la bande de roulement et les parties (3) de talon, une paire de tringles (2) disposées chacune dans une partie (3) de talon, une carcasse radiale (7) ayant au moins une nappe de câblés caoutchoutés disposée entre les parties (3) de talon et repliée autour des tringles (2), une bande de roulement (5) placée radialement à l'extérieur de la carcasse (7), et une couche (10) de ceinture disposée radialement à l'extérieur de la carcasse (7) et à l'intérieur de la bande de roulement (8), caractérisé en ce que, lorsque le pneumatique est monté sur sa jante normale et est gonflé à sa pression interne normale, 60 % au moins des espacements (d1, d2) en nombre des câblés adjacents (6) de carcasse disposés dans une partie (3) de côté du pneumatique délimitée entre deux points P1 et P2 ne sont pas inférieurs au quart ni supérieurs au double de l'épaisseur D des câblés de carcasse, le point P1 étant placé à la surface externe du pneumatique à une hauteur qui correspond à la hauteur d'un flasque Rb de jante et le point P2 étant placé à la surface externe du pneumatique à une hauteur égale au tiers de la hauteur H en coupe du pneumatique, et le caoutchouc de revêtement des câblés de carcasse a les propriétés suivantes : un module à 100 % qui n'est pas inférieur à $4.10^6$ Pa (40 kg/cm²) ni supérieur à $7.10^6$ Pa (70 kg/cm²), un allongement à la rupture qui n'est pas inférieur à 200 % ni supérieur à 350 %, et une contrainte à la rupture qui n'est pas inférieure à $15.10^6$ Pa (150 kg/cm²) ni supérieure à $30.10^6$ Pa (300 kg/cm²).

2.  Pneumatique selon la revendication 1, caractérisé en ce que le module à 100 % du caoutchouc de revêtement de câblés de carcasse est compris entre $4,5.10^6$ et $5,5.10^6$ Pa (45 et 55 kg/cm²), l'allongement à la rupture de ce caoutchouc est compris entre 280 et 340 %, et en outre sa rupture sous contrainte est comprise entre $20.10^6$ et $25.10^6$ Pa (200 et 250 kg/cm²).

3.  Pneumatique selon la revendication 1 ou 2, caractérisé en ce que, dans la nappe ou chaque nappe (7) de carcasse, l'épaisseur du caoutchouc de revêtement, mesurée depuis la surface des câblés de carcasse, est comprise entre le huitième de l'épaisseur des câblés de carcasse et cette épaisseur.

4.  Pneumatique selon la revendication 1, 2 ou 3, caractérisé en ce que 80 % au moins des espacements, en nombre de tous les espacements (d1, d2) existant dans la partie du côté du pneumatique définie entre les deux points (P1 et P2) ne sont pas inférieurs au quart ni supérieurs au double de l'épaisseur (D) des câblés de carcasse.

5.  Pneumatique selon la revendication 1, 2 ou 3, caractérisé en ce que tous les espacements (d1, d2) des câblés adjacents (6) de carcasse de la partie du côté du pneumatique définie entre les deux points (P1 et P2) ne sont ni inférieurs au quart ni supérieurs au double de l'épaisseur (D) des câblés de carcasse.

# FIG.1

# FIG.2

# FIG.3

# FIG.4